Europäisches Patentamt

European Patent Office

Office européen des brevets

(19)

(11) Veröffentlichungsnummer: **0 279 324**
A2

(12) **EUROPÄISCHE PATENTANMELDUNG**

(21) Anmeldenummer: 88101834.5

(22) Anmeldetag: 09.02.88

(51) Int. Cl.⁴: **B29C 67/22** , //B29L31:58

(30) Priorität: 20.02.87 DE 3705409

(43) Veröffentlichungstag der Anmeldung:
24.08.88 Patentblatt 88/34

(84) Benannte Vertragsstaaten:
**BE DE ES FR GB IT NL SE**

(71) Anmelder: **BAYER AG**
**Konzernverwaltung RP Patentabteilung**
**D-5090 Leverkusen 1 Bayerwerk(DE)**

(72) Erfinder: **Busch, Ralf, Dr.**
**Schoenauer Strasse 1**
**D-6834 Ketsch(DE)**
Erfinder: **Schoberth, Winfried, Dr.**
**Gustav-Freytag-Strasse 7**
**D-5090 Leverkusen 1(DE)**

(54) **Verfahren zum Herstellen von Polstern, insbesondere Sitzpolstern für Kraftfahrzeuge.**

(57) Um beim Herstellen von Polstern, insbesondere von Sitzpolstern für Kraftfahrzeugsitze, aus Mehrzonen-Schaumstoff zwischen diesen Zonen eine ausgeprägte Grenzfläche zu erhalten, wobei die Zonen unterschiedlicher Härte in ausreichender Weise bezüglich Lage und Ausdehnung reproduzierbar sind, plaziert man das zweite Reaktionsgemisch zu einer Zeit neben dem bereits eingebrachten Reaktionsgemisch im Formhohlraum, zu welcher das erste Reaktionsgemisch bereits einen solchen Dichteabfall und eine solche Viskositätszunahme erfahren hat, daß das zweite Reaktionsgemisch von der Seite her das erste Reaktionsgemisch verwirbelungsfrei unterfließen kann.

FIG. 4

EP 0 279 324 A2

## Verfahren zum Herstellen von Polstern, insbesondere Sitzpolstern für Kraftfahrzeuge

Die Erfindung betrifft ein Verfahren zum Herstellen von Polstern, insbesondere Sitzpolstern für Kraftfahrzeuge, aus Schaumstoff mit Zonen unterschiedlicher Härte, wobei ein erstes Weichschaumstoff bildendes Reaktionsgemisch in einen Formhohlraum eines Formwerkzeuges eingegeben und ancremen gelassen wird, bevor ein zweites, ebenfalls Weichschaumstoff, jedoch anderer Härte, bildendes Reaktionsgemisch in den Formhohlraum eingebracht wird.

Derartige Polster, insbesondere Sitzpolster und/oder Rückenlehnenpolster für Kraftfahrzeuge, haben verschiedene Funktionen zu erfüllen, wozu Zonen unterschiedlicher Härte notwendig sind. Beispielsweise sollen die Wangen solcher Polster härter sein, um als Seitenführung für den Körper des Sitzenden zu dienen. Schaumstoffe unterschiedlicher Härteeigenschaften, insbesondere hinsichtlich der Eindruckhärte, erzielt man in sehr einfacher Weise durch Verwendung von Weichschaumstoffen un terschiedlicher Dichte, Weichschaumstoff höherer Dichte besitzt eine entsprechend höhere Härte als Weichschaumstoff niedrigerer Dichte. Je nach Behandlungsfall können als härtere Weichschaumstoffe auch solche verwendet werden, welche bereits unter den Begriff "halbharte Schaumstoffe" fallen.

Die Herstellung solcher Sitzpolster aus Schaumstoffzuschnitten unterschiedlicher Härte durch Aneinanderkleben dieser Zuschnitte verliert wegen des manuellen Aufwandes mehr und mehr an Bedeutung. Sie wird zunehmend ersetzt durch die Herstellung von Mehrzonen-Schaumstoffpolstern durch Formverschäumung in einem Arbeitsgang. Hierzu bringt man mindestens zwei Schaumstoff unterschiedlicher Härte bzw. Dichte bildende Reaktionsgemische, insbesondere Polyurethan-Reaktionsgemische, in einen Formhohlraum ein.

Gemäß einem bekannten Verfahren (US-A-4 190 697) wird zuerst eine härteren Schaum bildende Mischung in die Form eingebracht, wobei diese erste Mischung anschäumen gelassen wird und eine zweite, weicheren Schaum bildende Mischung eingebracht wird, nachdem die erste Mischung 10 bis 80 % ihres vollen Aufschäumvolumens erreicht hat, dabei beim Einbringen die erste Mischung durchdringt und diese zum Aufschwimmen bringt, wonach beide Mischungen ausreagieren und einen Polyurethan-Schaumstoffartikel mit Zonen unterschiedlicher Dichte bilden.

Nachteilig ist bei diesem Verfahren, daß das Durchdringen und Unterfließen des zuerst eingebrachten Reaktions gemisches unregelmäßig erfolgt, so daß keine Formteile mit ausreichend reproduzierbaren Eigenschaften, insbesondere hinsichtlich der Eindrückhärte, herstellbar sind. Beim Durchdringen der Schicht aus dem bereits angecremten ersten Reaktionsgemisch ist es nämlich unvermeidlich, daß sich die beiden Gemische lokal miteinander verwirbeln, was sich im Fertigprodukt durch unregelmäßige Schlieren bemerkbar macht. Dieses Verfahren ist deshalb auch bestensfalls nur dazu geeignet, ein Polster aus zwei unterschiedlichen Schaumstoffschichten zu bilden bzw. den härteren Schaumstoff ganz oder teilweise durch weicheren Schaumstoff einzuhüllen. Lehren zum Herstellen von Sitzpolstern mit Zonen härteren Schaumstoffes an gewissen kritischen Stellen, beispielsweise den Seitenwangen, sind bei diesem Verfahren nicht gegeben.

Es besteht die Aufgabe, ein Verfahren der eingangs genannten Art zur Verfügung zu stellen, welches geeignet ist, Mehrzonen-Schaumstoffpolster mit komplizierter Verteilung der Zonen mit ausreichender Reproduzierbarkeit bezüglich Lage und Ausdehnung zu ermöglichen, wobei die Zonen eine ausgeprägte Grenzfläche zueinander bilden.

Diese Aufgabe wird dadurch gelöst, daß das zweite Reaktionsgemisch neben dem ersten Reaktionsgemisch im Formhohlraum plaziert wird, und zwar zu einer Zeit, zu welcher das erste Reaktionsgemisch bereits einen solchen Dichteabfall und eine solche Viskosität erreicht hat, daß es vom zweiten Reaktionsgemisch von der Seite her verwirbelungsfrei unterflossen wird.

Es versteht sich, daß das neue Verfahren auch für mehr als zwei Reaktionsgemische sinngemäß anzuwenden ist. Der exakte Zeitpunkt der Aufgabe des zweiten Reaktionsgemisches muß von Fall zu Fall durch Versuche ermittelt werden. Er hängt im wesentlichen ab von den Reaktionsgeschwindigkeiten der Reaktionsgemische, deren Menge und insbesondere der Fließgeschwindigkeit des zweiten Reaktionsgemisches, um nur die wesentlichen Parameter aufzuzeigen. Insbesondere erlaubt das neue Verfahren, relativ kleine Zonen eines unterschiedlichen Schaumstoffes in einem anderen zu plazieren. Es ist auch ohne Belang, welches der eingebrachten Gemische den weicheren oder den härteren Weichschaumstoff bildet. Dadurch ist dem Fachmann insbesondere die Möglichkeit gegeben, in größeren Zonen härteren Schaumstoffes kleine Zonen weicheren Schaumstoffes einzubetten. Die anfängliche Befürchtung, daß kleinere Mengen eines ersten Reaktionsgemisches beim Unterfließen des zweiten Reaktionsgemisches verschoben werden könnten, hat sich nicht bestätigt. Voraussetzung ist natürlich, daß man das zweite Reaktionsgemisch mit entsprechend langsamer Geschwindigkeit einfließen läßt. Falls es unbedingt erforderlich ist, mit etwas höherer Eintragsgeschwindigkeit für das zweite Reaktionsgemisch zu arbeiten, plaziert man das erste Reaktionsgemisch um einen entsprechenden Betrag entgegen der Strömungsrichtung, so daß es letztendlich durch den Schubimpuls des zweiten Reaktionsgemisches an die richtige Stelle zu liegen kommt.

Gemäß einer besonderen Durchführungsform des Verfahrens wird das zweite Reaktionsgemisch gegen die seitliche Wandung des Formhohlraumes eingebracht.

Diese Maßnahme ist vorzugsweise dann anwendbar, wenn das erste Reaktionsgemisch die gesamte oder nahezu gesamte Bodenfläche des Formhohlraumes einnimmt oder wenn an bestimmten Stellen eine starke Unterfütterung des sich aus dem ersten Reaktionsgemisch bildenden Schaumstoffes gewünscht ist.

Gemäß einer weiteren Ausführungsform wird das Formwerkzeug während des Einbringens des zweiten Reaktionsgemisches in Fließrichtung geneigt.

Dadurch wird ein besseres Unterfließen bewirkt, als wenn der Boden des Formhohlraumes horizontal ausgerichtet ist.

In der Weiterbildung dieses Verfahrensschrittes wird das Formwerkzeug nach dem Einbringen des zweiten Reaktionsgemisches wieder in die ursprüngliche Lage gebracht.

Dabei ist es nicht unbedingt erforderlich, daß das zweite Reaktionsgemisch bereits vollständig eingebracht worden ist.

In der Zeichnung ist der Verfahrensablauf zur Herstellung eines Sitzpolsters in seinen wesentlichen Stadien rein schematisch dargestellt, wobei lediglich die seit liche Kontur des Polsters gezeigt ist, welche der Kontur des Formhohlraumes des benötigten Schäumformwerkzeuges entspricht.

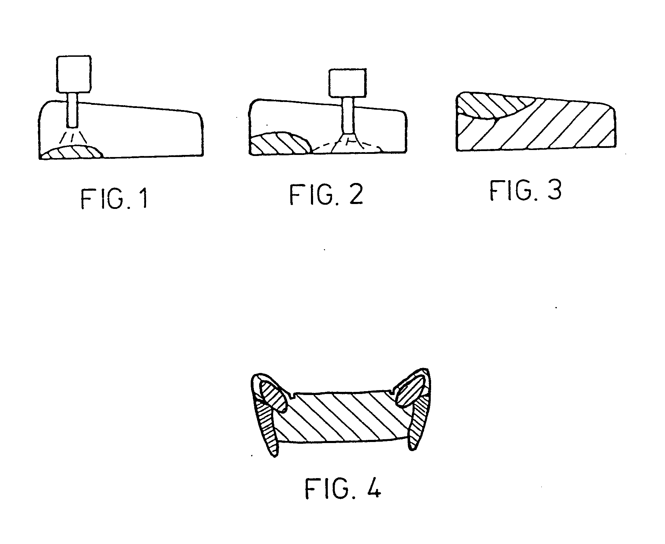

In Fig. 1 wird mittels eines Mischkopfes ein härteren Weichschaumstoff (Weichschaumstoff höherer Dichte) bildendes Polyurethan-Reaktionsgemisch in den Formhohlraum an der linken Seite der Fig. 1, welche der Vorderseite des Sitzpolsters entspricht, eingebracht. Es breitet sich dort geringfügig aus und cremt an. Durch das Ancremen erfährt das Reaktionsgemisch einen Dichteabfall und eine Zunahme der Viskosität.

Sobald Dichteabfall und Viskositätsanstieg groß genug sind, damit das zweite Reaktionsgemisch das erste unterfließen kann, plaziert man, wie in Fig. 2 dargestellt, eine größere Menge eines zweiten, weicheren Schaumstoffstoff (Weichschaumstoff geringerer Dichte) bildenden Polyurethan-Reaktionsgemisches rechts neben das sich bereits vornehmlich in die Höhe ausdehnende, erste Reaktionsgemisch. Das zweite Reaktionsgemisch breitet sich über den restlichen freien Boden des Formhohlraumes aus und läuft auch unter das erste Reaktionsgemisch, so daß dieses darauf - schwimmt. Beide Reaktionsgemische schäumen weiter auf und füllen den Formhohlraum des inzwischen durch einen Deckel verschlossenen Formwerkzeuges aus.

In Fig. 3 ist schließlich das fertige Polster dargestellt, welches die Zone härteren (dichteren) Schaumstoffes an der oberen vorderen Sitzkante zeigt.

In Fig. 4 ist ein Sitzpolster dargestellt, bei dessen Herstellung zuerst zwei kleine Mengen eines ersten, härteren Schaumstoff bildenden Reaktionsgemisches auf den Boden des Formhohlraumes aufgegeben wurde. Nach entsprechendem Ancremen wurde eine große Menge eines weicheren Schaumstoff bildenden Reaktionsgemisches dazwischen auf den Boden des Formhohlraumes aufgebracht. Da die härteren Zonen aber mit weicherem Schaumstoff überzogen sein sollten, hat man die Oberfläche des angecremten ersten Reaktionsgemisches mit einer dünnen Schicht des zweiten Reaktionsgemisches benetzt. Da das Sitzpolster besondere Wangenverstärkungen aufweisen sollte, wurde schließlich nach ausreichendem Ancremen des zweiten Reaktionsgemisches ein drittes, noch härteren Schaumstoff bildendes Reaktionsgemisch an die entsprechenden Stellen der seitlichen Formhohlraumwandung aufgebracht, von wo aus es das zweite Reaktionsgemische hinterflossen hat. Entsprechend ihrer Dichte sind die verschiedenen Schaumstoffzonen verschieden eng schraffiert.

## Ansprüche

1. Verfahren zum Herstellen von Polstern, insbesondere Sitzpolstern für Kraftfahrzeuge, aus Schaumstoff mit Zonen unterschiedlicher Härte, wobei ein erstes, Weichschaumstoff bildendes Reaktionsgemisch in einen Formhohlraum eines Formwerkzeuges eingegeben und ancremen gelassen wird, bevor ein zweites, ebenfalls Weichschaumstoff, jedoch anderer Härte, bildendes Reaktionsgemisch in den Formhohlraum eingebracht wird, dadurch gekennzeichnet, daß das zweite Reaktionsgemisch neben dem ersten Reaktionsgemisch im Formhohlraum plaziert wird, und zwar zu einer Zeit, zu welcher das erste Reaktionsgemisch bereits einen solchen Dichteabfall und eine solche Viskosität erreicht hat, daß es vom zweiten Reaktionsgemisch von der Seite her verwirbelungsfrei unterflossen wird.

2. Verfahren nach Anspruch 1, dadurch gekennzeichnet, daß das zweite Reaktionsgemisch gegen die seitliche Wandung des Formhohlraumes eingebracht wird.

3. Verfahren nach Anspruch 1 oder 2, dadurch gekennzeichnet, daß das Formwerkzeug zum Einbringen des zweiten Reaktionsgemisches in Fließrichtung geneigt wird.

4. Verfahren nach Anspruch 3, dadurch gekennzeichnet, daß das Formwerkzeug nach dem Einbringen des zweiten Reaktionsgemisches wieder in die ursprüngliche Stellung gebracht wird.

FIG. 1

FIG. 2

FIG. 3

FIG. 4